# FASCICULE DE BREVET EUROPEEN

(11) **EP 2 810 090 B1**
(45) Date de publication et mention de la délivrance du brevet: **19.09.2018**
(21) Numéro de dépôt: 13744013.7
(22) Date de dépôt: 29.01.2013
(51) Int. Cl.: G01R 31/36, B60R 25/10, B60R 25/102, B60R 25/30, B60R 25/34, B60L 11/18, H01M 10/625, H02J 7/00, H02J 7/02, B60L 3/12, H01M 10/42

(54) **SYSTÈME PROTÉGÉ DE CONTRÔLE DE TRANSACTIONS D'ÉNERGIE POUR UN VÉHICULE ÉLECTRIQUE**
GESCHÜTZTES SYSTEM ZUR STEUERUNG VON STROMTRANSAKTIONEN FÜR EIN ELEKTRISCHES FAHRZEUG
PROTECTED SYSTEM FOR CONTROLLING POWER TRANSACTIONS FOR AN ELECTRIC VEHICLE

(30) Priorité: 30.01.2012 CA 2765945
(43) Date de publication de la demande: 10.12.2014
(73) Titulaire: Hydro-Québec, Montréal QC H2Z 1A4 (CA)
(72) Inventeur: LÉONARD, François, Montréal, Québec H1C 1B1 (CA); CHAMPAGNE, Dominique, Mont-Saint-Hilaire, Québec J3H 3K2 (CA); BHERER, Jacques, Saint-Jean-sur-Richelieu, Québec J2W 3C9 (CA); PINEAU, Daniel, Verchères, Québec J0L 2R0 (CA)
(74) Mandataire: Cabinet Plasseraud
(86) Numéro de dépôt international: PCT/CA2013/050063
(87) Numéro de publication internationale: WO 2013/113112

(56) Documents cités:
- EP-A2- 2 295 282
- WO-A1-00/42689
- WO-A1-2010/134853
- WO-A2-2004/064222
- WO-A2-2010/033517
- CN-A- 101 318 489
- CN-U- 201 876 720
- CN-U- 202 004 115
- DE-T2- 69 837 816
- US-A- 5 349 535
- US-A- 5 701 068
- US-A1- 2007 080 662
- US-A1- 2010 121 511
- US-B2- 7 139 839

## Description

### DOMAINE DE L'INVENTION

L'invention concerne les systèmes de gestion de batterie de véhicule électrique. Plus particulièrement, l'invention porte sur un système protégé de contrôle de transactions d'énergie avec un système de gestion de batterie d'un véhicule électrique, permettant notamment de surveiller l'intégrité du système énergétique du véhicule électrique et de détecter une situation de subtilisation d'énergie.

### ÉTAT DE L'ART

La transition des énergies non-renouvelables vers des énergies renouvelables aura un impact sur la fiscalité et la taxation de ces énergies. L'utilisation des véhicules électriques à moyen terme par une plus grande population suscitera un problème récurrent de vol d'énergie pour les compagnies d'électricité. Pour l'utilisateur, cela impliquera l'assurance que les données concernant l'état de santé de la batterie, la batterie elle-même, son boîtier et son système de gestion sont intègres et n'ont pas été altérées.

Un véhicule électrique comporte un système de gestion de batterie ("Battery Management System" ou "BMS"). Le BMS a d'ordinaire pour fonction de protéger les cellules de la batterie, de les contrôler, de connaître l'état de la batterie et d'en estimer l'état de charge, de maximiser ses performances ainsi que d'échanger avec différents composants ou dispositifs du système dans lequel il évolue. Il permet donc, par exemple, de générer l'information nécessaire à l'affichage de l'état de la charge au tableau de bord du véhicule électrique.

Le BMS gère la décharge, les paramètres de la charge et l'utilisation sécuritaire de la batterie en estimant son état par des moyens de mesure et des algorithmes. En contrôlant sa plage de fonctionnement, son environnement et en balançant la charge de la batterie, le BMS protège la batterie et en optimise les performances et la durabilité.

La batterie du véhicule peut-être utilisée à d'autres fins qu'au fonctionnement du véhicule électrique. En effet, la batterie peut débiter dans un réseau électrique lorsque sa recharge est complétée mais avant que celle-ci soit rendue disponible au véhicule. Dans ce cas, l'effet de masse d'une grande quantité de batteries a un effet stabilisateur sur le réseau électrique. Cette configuration est appelée V2G ("Vehicule to Grid"). Il y aussi le V2H ("Vehicule to Home") où la batterie peut fournir ou recevoir de l'énergie d'un panneau d'alimentation d'une résidence, par exemple lors d'une panne électrique du réseau. Et enfin, la batterie peut débiter dans une autre charge (e.g. une autre batterie) connectée au véhicule. Il s'agit alors de V2L ("Vehicule to Load"). Certaines de ces configurations nécessitent que le véhicule électrique ait un chargeur bidirectionnel plutôt qu'unidirectionnel.

Les bornes de recharge à courant alternatif (CA) ne possèdent pas de chargeur intégré. Ce n'est pas le cas des bornes de recharge rapide à courant continu (CC) qui sont munies d'un chargeur afin de contrôler la tension et le courant de la charge. Ce type de borne utilise un protocole de communication pour les échanges avec le BMS concernant les paramètres de la recharge. Certaines bornes de recharge intègrent des fonctionnalités additionnelles: compteur d'énergie, système de paiement, accès internet selon qu'il s'agisse d'une borne de recharge à accès privé ou publique. La consommation électrique nécessaire à la charge est disponible par lien de communication avec ce type de borne.

Dans ses tâches, le BMS effectue des mesures de température, de courant et de tension. De plus, le BMS conserve l'historique de ces mesures. Selon la configuration de la batterie, ces mesures s'étendent aux différentes cellules ou regroupement de cellules de la batterie. L'énergie disponible en tout temps est calculée à partir de ces mesures et rendue disponible à l'unité centrale de gestion du véhicule. Le BMS peut quantifier et enregistrer les transactions d'énergie. Les historiques sont consultés par les algorithmes du BMS et peuvent aussi être communiqués à l'extérieur du BMS.
Bien qu'il existe une grande variété de BMS, il y a un intérêt à ce qu'un BMS puisse indiquer une situation de subtilisation d'énergie et de substitution des éléments de la combinaison batterie, boîtier et BMS dans le but de falsifier le pedigree du système.

De plus il y a le document US 2007/080662A1, qui révèle un système pour protéger le contrôle de transaction d'énergie.

### SOMMAIRE

Un objet de l'invention est de proposer un système protégé de contrôle de transactions d'énergie avec un système de gestion de batterie d'un véhicule électrique, qui permet de surveiller l'intégrité du système énergétique du véhicule électrique, notamment la batterie, son boîtier et le système de gestion de batterie, et de détecter une situation de subtilisation d'énergie.
Un autre objet de l'invention est de proposer un tel système protégé de contrôle qui peut communiquer et identifier d'autres équipements, par exemple une borne de recharge d'un réseau public et/ou un chargeur bidirectionnel, en plus d'autres composants du véhicule électrique.
Un autre objet de l'invention est de proposer un tel système protégé de contrôle qui peut enregistrer les transactions d'énergie (charge/décharge).
Un autre objet de l'invention est de proposer un tel système protégé de contrôle qui peut signaler à l'utilisateur et/ou à la compagnie d'électricité que l'intégrité physique et/ou logicielle de la batterie et de son BMS est atteinte.
Selon un aspect de l'invention, il est proposé un système protégé de contrôle de transactions d'énergie pour un véhicule électrique doté d'un boîtier renfermant une batterie, d'un système de gestion de batterie, d'une unité de gestion du véhicule, et d'un bus entre l'unité de gestion du véhicule et le système de gestion de batterie, le système protégé de contrôle comprenant:
des modules d'identification intégrés respectivement au boîtier et au système de gestion de batterie, fournissant des informations d'identification du boîtier et du système de gestion de batterie;
un ensemble de capteurs d'intégrité du boîtier et de la batterie ayant des états consultables;
un module de surveillance d'intégrité connecté aux capteurs d'intégrité, produisant des informations indicatives des états des capteurs;
un module d'identification de dispositifs reliés au bus;
un module de traitement d'informations produites par le système de gestion de batterie, l'unité de gestion du véhicule, le module de surveillance d'intégrité, le module d'identification et d'autres dispositifs donnés lorsque reliés au bus, le module de traitement ayant:
   une mémoire stockant des données indicatives de caractéristiques techniques de la batterie, et des données d'événements, de transactions et énergétiques découlant de traitements sélectifs préétablis des informations reçues en fonction des caractéristiques techniques de la batterie; et
   une unité de calcul déterminant un bilan énergétique en fonction des données d'événements, de transactions et énergétiques; et
un module de communication ayant un mode de transmission d'une alerte en cas de débalancement dans le bilan énergétique et en cas d'une atteinte à l'intégrité révélée par les données stockées dans la mémoire du module de traitement.

### DESCRIPTION BRÈVE DES DESSINS

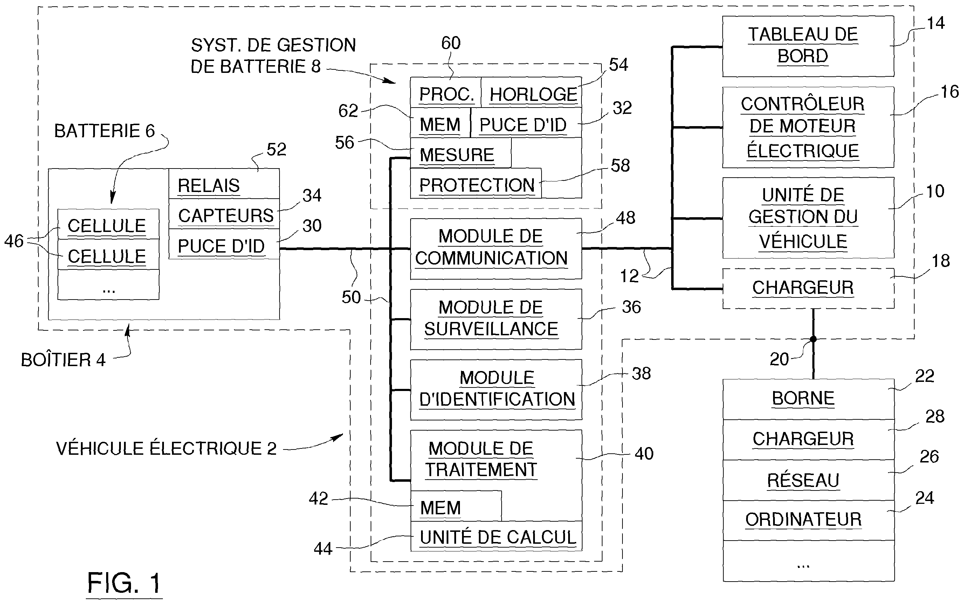

La Figure 1 est un diagramme schématique d'un système protégé de contrôle de transactions d'énergie pour un véhicule électrique, selon l'invention.

### DESCRIPTION DÉTAILLÉE DES RÉALISATIONS PRÉFÉRÉES

En référence à la Figure 1, il est montré un système protégé de contrôle de transactions d'énergie pour un véhicule électrique 2, selon l'invention. Le véhicule électrique 2 est doté d'un boîtier 4 renfermant une batterie 6, d'un système de gestion de batterie 8, d'une unité de gestion du véhicule 10, et d'un bus 12 entre l'unité de gestion du véhicule 10 et le système de gestion de batterie 8. Le véhicule électrique 2 comporte d'autres composants ou dispositifs servant à son utilisation et son fonctionnement, comme un tableau de bord 14 et un contrôleur de moteur électrique 16 reliés au bus 12. Le véhicule électrique 2 peut aussi être doté d'un chargeur 18 couplé entre le bus 12 et un élément de connexion externe 20 permettant de connecter le véhicule électrique 2 à une borne de recharge 22 ou un autre dispositif comme un ordinateur 24, un lien avec le réseau électrique 26 ou une autre source d'énergie, ou un chargeur externe 28 si le véhicule électrique 2 n'intègre pas de chargeur.

Le système protégé de contrôle comporte des modules d'identification pouvant être avantageusement formés par des puces 30, 32 intégrées respectivement au boîtier 4 et au système de gestion de batterie 8, fournissant des informations d'identification du boîtier 4 et du système de gestion de batterie 8. D'autres moyens d'identification peuvent être utilisés au lieu de puces si voulu.

Le système protégé de contrôle comporte aussi un ensemble de capteurs d'intégrité 34 du boîtier 4 et de la batterie 6 qui ont des états consultables, i.e. dont les états peuvent être connus au moyen de signaux d'état produits par les capteurs 34 ou d'autres mécanismes de contrôle. Un module de surveillance d'intégrité 36 est connecté aux capteurs d'intégrité 34 et produit des informations indicatives des états des capteurs 34.

Le système protégé de contrôle comporte de plus un module d'identification 38 de dispositifs reliés au bus 12, et un module de traitement 40 des informations produites par le système de gestion de batterie 8, l'unité de gestion du véhicule 10, le module de surveillance d'intégrité 36, le module d'identification 38 et d'autres dispositifs donnés lorsque reliés au bus 12.

Le module de traitement 40 a une mémoire 42 et une unité de calcul 44. La mémoire 42 stocke des données indicatives de caractéristiques techniques de la batterie 6, et des données d'événements, de transactions et énergétiques découlant de traitements sélectifs préétablis (décrits plus loin) des informations reçues en fonction des caractéristiques techniques de la batterie. Les caractéristiques techniques servent à définir des conditions d'utilisation électrique et thermique de la batterie 6. Typiquement mais non limitativement, les caractéristiques techniques de la batterie 6 ont trait à un type de chimie, un nombre de cellules 46 qu'elle regroupe, une configuration des cellules 46, une capacité nominale, une énergie nominale, une plage de tension, une tension maximale en charge d'une cellule 46, une tension minimale d'une cellule 46, des valeurs maximales de courant en continu et en appel de puissance, un taux maximal d'autodécharge par cellule 46, un mode d'égalisation et des plages de température en charge et en décharge. L'unité de calcul 44 détermine un bilan énergétique en fonction des données d'événements, de transactions et énergétiques stockées dans la mémoire 42.

Le système protégé de contrôle comporte aussi un module de communication 48 ayant un mode de transmission d'une alerte en cas de débalancement dans le bilan énergétique et en cas d'une atteinte à l'intégrité révélée par les données stockées dans la mémoire 42 du module de traitement 40. Le module de communication 48 peut aussi servir d'interface entre le bus 12 et un bus 50 reliant le système de gestion de batterie 8 avec les modules 36, 38, 40, la batterie 6 et d'autres composants comme les capteurs 34, la puce d'identification 30 et des relais 52 de commande et de protection de la batterie 6. Le module de communication 48 peut comporter un ou plusieurs ports de communication de type CAN bus ("Controller Area network" bus) ou autre, dont le support physique peut varier tel sans fil, Ethernet, etc., destinés à communiquer avec les dispositifs reliés aux bus 12, 50 qui peuvent être configurés comme des réseaux série ou autre, e.g. conducteurs électriques ou câbles séparés. Le module de communication 48 peut ainsi communiquer avec l'unité de gestion du véhicule 10, le chargeur 18, la borne de recharge 22, le contrôleur de moteur électrique 16, le tableau de bord 14 du véhicule 2. Le module de communication 48 permet aussi de communiquer avec un ordinateur distant 24 avec contrôle d'accès pouvant être utilisé pour recevoir des données publiques et des données privées, chiffrées ou non.

Le module d'identification 38 peut être configuré pour reconnaître l'origine du lien de communication par exemple parmi ses ports de communication et avoir un mode d'identification d'un dispositif relié au bus 12, permettant par exemple d'identifier une borne de recharge 22 munie d'une adresse MAC (Media Access Control ou communément adresse Ethernet) ou son équivalent, par exemple coordonnées GPS (Global Positionning System) et adresse IP (Internet Protocol). Ces informations peuvent faire partie des données de transactions.

Les données d'événements, de transactions et énergétiques peuvent être stockées sous forme de tables respectives ou autre structure organisée d'informations afin de déterminer et identifier une situation de déséquilibre ou une tentative d'accès non autorisé aux données et au matériel du système. La table des transactions peut servir à stocker des identifiants des composants avec lesquels de l'énergie a été transigée ainsi que des mesures d'énergie indiquées par ces composants via le module de communication 48 et des identifiants avec lesquels des échanges ont eu lieu, par exemple avec un ordinateur 24 externe. Une configuration dans laquelle la batterie 6 est utilisée peut apparaître dans la table des transactions, par exemple une configuration V2G. La table énergétique peut servir à stocker des données indicatives des énergies entrante et sortante, par exemple sous forme de date et heure fournies par une horloge 54 du système de gestion de batterie 8, d'étape de charge ou décharge, une quantité d'énergie mesurée par une unité de mesure 56 du système de gestion de batterie 8, et une référence dans la table de transactions. Une décharge de la batterie 6 dans le véhicule 2 lors de son fonctionnement constitue par exemple une transaction. La table d'événements peut servir à cumuler des changements d'état de certains capteurs 34 et des occurrences qui émanent de séquence de réalisation non nominales dans des algorithmes appliqués par le système de gestion de batterie 8 ainsi que des événements repérés dans les informations produites par l'unité de gestion du véhicule 10, par exemple une opération visant à charger la batterie 6. Un événement peut être lié à la table de transactions, par exemple lors d'une authentification de l'utilisateur du véhicule 2 ou lorsque l'état d'un relais 52 est lu et ne correspond pas à l'état dans lequel il a été commandé. Les données de transactions stockées dans la mémoire 42 peuvent comprendre des données d'identification et de configuration des dispositifs détectés par le module d'identification 38 et selon un état dans lequel se trouve le véhicule 2 (e.g. arrêt, marche, pistolet raccordé ou non, etc.), des données de temps associées aux transactions, et des données indicatives des types de transactions, en relation avec les données d'événement. Les données énergétiques stockées dans la mémoire 42 peuvent comprendre des données de capacité, de mesure d'énergie entrante et sortante et d'efficacité de la batterie 6 selon les informations produites par le système de gestion de batterie 8 et les caractéristiques techniques de la batterie 6, en relation avec les données de transactions.

L'unité de mesure 56 du système de gestion de batterie 8 peut mesurer des valeurs brutes de tension, de courant, d'induction, d'impédance et de température de la batterie 6. L'unité de calcul 44 est configurée pour déterminer des quantités formant les données énergétiques en fonction des valeurs brutes mesurées par le système de gestion de batterie 8 lors d'opérations de charge et de décharge de la batterie 6. Le module de traitement 40 peut avoir un mode de traitement pour intégrer une valeur de courant dans le temps afin de déterminer une capacité totale (A.h) d'une étape de charge ou de décharge, et calculer des variables comme la puissance transitée (W), l'énergie (W.h), l'efficacité (%), un nombre de cycles totaux de charge et décharge de la batterie 6 et évaluer la résistance des cellules 46 de la batterie 6. Ces informations peuvent faire partie des données énergétiques stockées dans la mémoire 42. Le module de traitement 40 peut être configuré pour calculer des projections énergétiques avec l'unité de calcul 44 et stocker des données résultant des projections énergétiques et formant des données de référence dans la mémoire 42.

Le système de gestion de batterie 8 comporte de préférence un circuit de protection 58 configuré pour protéger la batterie 6 selon les caractéristiques techniques de la batterie 6 et des cellules 46 qui la compose. Des signaux de tension, de courant, d'inductance, d'impédance et de température de la batterie 6, des signaux d'états des relais 52 de protection et des signaux de commande acheminés via le module de communication 48 peuvent être traités par le circuit de protection 58. Le circuit de protection 58 peut être configuré pour activer les relais 52 dont ceux de protection électrique et générer les commandes de contrôle. Certains des capteurs 34 peuvent être destinés à assurer une protection de l'intégrité physique du système de gestion de batterie, de la batterie 6 et de son boîtier 4, alors que d'autres peuvent être destinés à déceler et réagir à des défaillances de protection électriques et mécaniques de l'assemblage des cellules 46 de la batterie 6 et de son boîtier 4.

La mémoire 42 du module de traitement 40 peut être configurée pour stocker et gérer des identifiants des cellules 46 de la batterie 6, du boîtier 4 et du système de gestion de batterie 8 formant une définition élémentaire du système protégé de contrôle, et pour stocker des identifiants du chargeur intégré 18 s'il y a lieu, de l'unité de gestion du véhicule 10, du contrôleur de moteur électrique 16 et d'autres dispositifs reliés au bus 12 si voulu. Le module de surveillance 36 peut être configuré pour valider une correspondance des identifiants avec les données antérieurement stockées dans la mémoire 42 du module de traitement 40 et inscrire un code d'événement en cas de changement ou différence détecté dans la combinaison du groupe formé par le système de gestion de batterie 8, du boîtier 4 et de la batterie 6 (et les autres dispositifs si voulu) lorsqu'un ou plusieurs identifiants ne correspondent pas avec les identifiants attendus, de manière à signaler une atteinte possible à l'intégrité. La validation peut être effectuée lors de la mise sous tension du système de gestion de batterie 8 et à d'autres occasions si voulu. Les identifiants des cellules 46, du boitier 4 et du système de gestion de batterie 8 peuvent être stockés sous forme de fichier ou autre forme si voulu. L'identifiant d'une cellule 46 peut consister en un code barre ou un identifiant arbitraire. Les identifiants du boitier 4 et du système de gestion de batterie 8 sont obtenus auprès des puces 30, 32, la puce 30 pouvant par exemple être dans le boitier 4, la puce 32 pouvant être située sur un circuit imprimé du système de gestion de batterie 8 où se trouve son processeur 60 et sa mémoire 62. L'identifiant du contrôleur de moteur électrique 16 est utile puisqu'un transfert d'énergie servant à charger la batterie 6 est possible à partir de cet équipement, i.e. freinage régénératif. L'accès au fichier est de préférence protégé en lecture et en écriture. Une alerte en cas d'atteinte à l'intégrité peut être transmise à l'unité de gestion du véhicule 10 ou un ordinateur distant 24 par l'intermédiaire du processeur 60 du système de gestion de batterie 8 et du module de communication 48.

L'unité de calcul 44 effectue un calcul de la balance énergétique entrante et sortante. À chaque remplissage e.g. signalé par l'unité de gestion du véhicule 10 au système de gestion de batterie 8, l'unité de calcul 44 détermine le bilan énergétique par un étalonnage relatif de mesures de courant, de tension et de temps (Volt.Ampère.Heure) selon une lecture obtenue par le système de gestion de batterie 8, et détermine un état de débalancement dans le bilan énergétique lorsqu'un écart entre des valeurs d'énergie entrante et d'énergie sortante excède un seuil acceptable prédéfini. L'étalonnage peut aussi être fait selon une lecture de la borne 22 lorsqu'elle est disponible. Au-delà du seuil, dans une configuration possible, le module de traitement 40 avertit, par l'intermédiaire du processeur 60 du système de gestion de batterie 8, l'unité de gestion du véhicule 10 d'un état significatif de débalancement entre l'énergie entrante et l'énergie sortante et peut avertir la prochaine borne 22 ou autre dispositif connecté à l'élément de connexion 20. Un bilan encrypté peut être communiqué à un ordinateur 24 ou processeur externe via le module de communication 48. Une procédure implantée par exemple dans le module de communication 48 peut permettre d'authentifier une requête de transfert du bilan. Lorsqu'un dispositif est authentifié au moyen du module d'identification 38, une information d'authentification est datée et inscrite à la table des transactions. Le module de communication 48 peut avoir un mode de transmission claire et un mode de transmission chiffrée des données stockées dans la mémoire 42 du module de traitement 40 ou dans une autre source comme la mémoire 62 du système de gestion de batterie 8, selon que les données ont un attribut publique ou privé d'après des conditions prédéfinies par les autorités ou responsables du système. Pour une sécurité accrue, l'attribut de toutes les données colligées par le module de traitement 40, comme le bilan énergétique, devraient être privé de sorte que ces données soient transmises sous forme chiffrée.

La mémoire 62 du système de gestion de batterie 8 peut servir à stocker des données d'historique indicatives d'un profil d'utilisation du véhicule 2 et de la batterie 6. Le module de communication 48 peut être configuré pour transmettre les données d'historique en réponse à une requête correspondante reçue par le module de communication 48, e.g. acheminée par le bus 12 ou par un lien sans fil. Les données d'historique peuvent avoir un attribut public de sorte que le module de communication 48 les transmette sans chiffrement.

Les modules de surveillance d'intégrité 36, d'identification de dispositifs 38, de traitement d'informations 40 et de communication 48 peuvent être intégrés en tout ou en partie dans le système de gestion de batterie 8 selon que ses capacités matérielles et fonctionnelles le permettent, par exemple qu'il soit possible de modifier sa programmation. Par exemple, les mémoires 42, 62 peuvent être formées par une même mémoire partagée, l'unité de calcul 44 peut être réalisée par le processeur 60, etc. Les modules 36, 38, 40, 48 peuvent aussi prendre la forme de circuits électriques/électroniques séparés ou combinés couplés au système de gestion de batterie 8. Les alertes de débalancement énergétique ou d'atteinte à l'intégrité peuvent déclencher un signal sonore ou un signal de type "service batterie" s'affichant sur le tableau de bord 14 du véhicule 2. Le système protégé de contrôle peut être doté d'un accéléromètre pour valider les transactions avec le moteur électrique, e.g. en simulant l'apport possible découlant d'un freinage régénératif. Un profil de puissance/accélération type peut être calculé pour une série de transactions en cours lors du fonctionnement du véhicule 2 afin de valider les transactions du freinage régénératif. Un déploiement des coussins gonflables suite à un impact peut être surveillé de manière que des mesures soient prises pour constater s'il y a eu endommagement de la batterie 6 et prendre des actions en conséquence comme mettre une cellule 46 endommagée hors circuit ou changer sa température.

Bien que des réalisations de l'invention aient été illustrées dans le dessin ci-joint et décrites ci-dessus, il apparaîtra évident pour les personnes versées dans l'art que des modifications peuvent être apportées à ces réalisations sans s'écarter de l'invention.

## Revendications

1. Système protégé de contrôle de transactions d'énergie pour un véhicule électrique doté d'un boîtier (4) renfermant une batterie (6), d'un système de gestion de batterie (8), d'une unité de gestion du véhicule (10), et d'un bus (12) entre l'unité de gestion du véhicule (10) et le système de gestion de batterie (8), le système protégé de contrôle comprenant:
des modules d'identification (38) intégrés respectivement au boîtier et au système de gestion de batterie (8) fournissant des informations d'identification du boîtier et du système de gestion de batterie;
un ensemble de capteurs d'intégrité du boîtier et de la batterie (34) ayant des états consultables;
un module de surveillance (36) d'intégrité connecté aux capteurs d'intégrité (34), produisant des informations indicatives des états des capteurs (34);
un module d'identification (38) de dispositifs reliés au bus (12),
un module de traitement d'informations (40) produites par le système de gestion de batterie (8), l'unité de gestion du véhicule (10), le module de surveillance d'intégrité (36), le module d'identification (38), le module de traitement (40) ayant:
une mémoire (42) stockant des données indicatives de caractéristiques techniques de la batterie, et des données d'événements, de transactions et énergétiques découlant de traitements sélectifs préétablis des informations reçues en fonction des caractéristiques techniques de la batterie; et
une unité de calcul (44) déterminant un bilan énergétique en fonction des données d'événements, de transactions et énergétiques; et
un module de communication (48) ayant un mode de transmission d'une alerte en cas de débalancement dans le bilan énergétique et en cas d'une atteinte à l'intégrité révélée par les données stockées dans la mémoire (42) du module de traitement (40).

2. Le système protégé de contrôle selon la revendication 1, dans lequel les modules d'identification comprennent des puces d'identification fournissant des identifiants respectifs gérés par le module de traitement (40) de manière à inscrire un code d'événement dans la mémoire (42) du module de traitement en cas de différence avec un identifiant antérieurement stocké dans la mémoire (42).

3. Le système protégé de contrôle selon la revendication 1, dans lequel les données d'événements stockées dans la mémoire (42) du module de traitement (40) comprennent des données d'événements repérés dans les informations produites par l'unité de gestion du véhicule (10).

4. Le système protégé de contrôle selon la revendication 1, dans lequel les données de transactions stockées dans la mémoire (42) du module de traitement (40) comprennent des données d'identification et de configuration des dispositifs détectés par le module d'identification (38) et selon un état dans lequel se trouve le véhicule, des données de temps associées aux transactions, et des données indicatives des types de transactions, en relation avec les données d'événement stockées.

5. Le système protégé de contrôle selon la revendication 1, dans lequel les données énergétiques stockées dans la mémoire (42) du module de traitement (40) comprennent des données de capacité, de mesure d'énergie entrante et sortante et d'efficacité de la batterie (6) selon les informations produites par le système de gestion de batterie (8) et les caractéristiques techniques de la batterie, en relation avec les données de transactions stockées.

6. Le système protégé de contrôle selon la revendication 5, dans lequel le système de gestion de batterie (8) mesure des valeurs brutes de tension, de courant, d'induction, d'impédance et de température de la batterie, et l'unité de calcul est configurée pour déterminer des quantités formant les données énergétiques en fonction des valeurs brutes mesurées par le système de gestion de batterie lors d'opérations de charge et de décharge de la batterie (6).

7. Le système protégé de contrôle selon la revendication 5, dans lequel les données énergétiques stockées dans la mémoire (42) du module de traitement (40) comprennent de plus des données indicatives d'au moins un d'une puissance transitée et d'un nombre de cycles totaux de charge et décharge de la batterie.

8. Le système protégé de contrôle selon la revendication 5, dans lequel les caractéristiques techniques de la batterie comprennent des caractéristiques parmi un type de chimie, un nombre de cellules, une configuration des cellules, une capacité nominale de la batterie, une énergie nominale, une plage de tension, une tension maximale en charge d'une cellule, une tension minimale d'une cellule, des valeurs maximales de courant en continu et en appel de puissance, un taux maximal d'autodécharge par cellule, un mode d'égalisation et des plages de température en charge et en décharge.

9. Le système protégé de contrôle selon la revendication 1, dans lequel le module de traitement (40) est configuré pour calculer des projections énergétiques avec l'unité de calcul et stocker des données résultant des projections énergétiques et formant des données de référence dans la mémoire.

10. Le système protégé de contrôle selon la revendication 1, dans lequel le module de communication (48) est relié au bus (12) et le mode de transmission d'une alerte inclut une transmission d'un état de débalancement dans le bilan énergétique et une transmission des données correspondantes stockées dans la mémoire du module de traitement (40) sous forme chiffrée sur le bus (12) en réponse à une requête correspondante reçue par le module de communication (48).

11. Le système protégé de contrôle selon la revendication 1, dans lequel le véhicule électrique (2) est doté d'un élément de connexion externe relié au bus, et les dispositifs que le module d'identification (38) gère comprennent au moins un d'une borne (22) de recharge et un ordinateur (24) branché sur l'élément de connexion externe (20).

12. Le système protégé de contrôle selon la revendication 1, dans lequel au moins un des modules de surveillance (36) d'intégrité, d'identification de dispositifs (38), de traitement (40) d'informations et de communication (48) est intégré dans le système de gestion de batterie (8).

13. Le système protégé de contrôle selon la revendication 1, dans lequel le module de communication (48) est relié au bus (12) et comprend un mode de transmission claire et un mode de transmission chiffrée des données stockées dans la mémoire du module de traitement (40) selon que les données ont un attribut publique ou privé d'après des conditions prédéfinies.

14. Le système protégé de contrôle selon la revendication 1, dans lequel le véhicule électrique est aussi doté de relais (52) de protection de la batterie et de capteurs (34) de défaillance de protection électrique et mécanique de la batterie (6) et du boîtier (4), et le module de traitement (40) est configuré pour stocker des données d'événements en cas d'une défaillance d'après un état d'un des relais ou un signal prédéfini produit par un des capteurs (34) de défaillance.

15. Le système protégé de contrôle selon la revendication 1, dans lequel le véhicule électrique est aussi doté d'un contrôleur de moteur électrique (16) relié au bus (12), et le module de traitement (40) est configuré pour gérer des informations indicatives d'échange d'énergie avec le contrôleur de moteur électrique (16).

16. Le système protégé de contrôle selon la revendication 1, dans lequel le module d'identification (38) a un mode d'identification (38) d'un dispositif relié au bus (12) par au moins un d'une adresse MAC, une localisation GPS et une adresse IP.

17. Le système protégé de contrôle selon la revendication 1, dans lequel la mémoire du module de traitement (40) est configurée pour stocker des identifiants des cellules (46) de la batterie, du boîtier (4) et du système de gestion de batterie (8) formant une définition élémentaire du système protégé de contrôle, et pour stocker des identifiants d'un chargeur (18) intégré, de l'unité de gestion du véhicule (10) et d'un contrôleur de moteur électrique (16).

18. Le système protégé de contrôle selon la revendication 17, dans lequel le module de surveillance (36) est configuré pour valider une correspondance des identifiants avec les données antérieurement stockées dans la mémoire du module de traitement (40) et inscrire un code d'événement en cas de changement détecté de manière à signaler une atteinte possible à l'intégrité.

19. Le système protégé de contrôle selon la revendication 1, dans lequel l'unité de calcul (44) est configuré pour déterminer le bilan énergétique par un étalonnage relatif de mesures de courant, de tension et de temps selon une lecture obtenue par le système de gestion de batterie, batterie (8), et déterminer un état de débalancement dans le bilan énergétique lorsqu'un écart entre des valeurs d'énergie entrante et d'énergie sortante excède un seuil prédéfini.

20. Le système protégé de contrôle selon la revendication 1, dans lequel le système de gestion de batterie (8) comprend une mémoire (62) stockant des données d'historique indicatives d'un profil d'utilisation du véhicule, et le module de communication (48) est configuré pour transmettre les données d'historique en réponse à une requête correspondante reçue par le module de communication (48).

## Patentansprüche

1. Geschütztes System zum Steuern von Energietransaktionen für ein Elektrofahrzeug, das mit einem eine Batterie (6) umschließenden Gehäuse (4), einem Batterieverwaltungssystem (8), einer Verwaltungseinheit des Fahrzeugs (10) und einem Bus (12) zwischen der Verwaltungseinheit des Fahrzeugs (10) und dem Batterieverwaltungssystem (8) versehen ist, wobei das geschützte Steuersystem enthält:
in das Gehäuse bzw. das Batterieverwaltungssystem (8) integrierte Identifizierungsmodule (38), die Identifizierungsinformationen des Gehäuses und des Batterieverwaltungssystems liefern;
eine Einheit von Integritätssensoren des Gehäuses und der Batterie (34), die abfragbare Zustände haben;
ein mit den Integritätssensoren (34) verbundenes Integritätsüberwachungsmodul (36), das die Zustände der Sensoren (34) anzeigende Informationen erzeugt;
ein Identifizierungsmodul (38) von mit dem Bus (12) verbundenen Vorrichtungen,
ein Verarbeitungsmodul (40) von Informationen, die vom Batterieverwaltungssystem (8), von der Verwaltungseinheit des Fahrzeugs (10), vom Integritätsüberwachungsmodul (36), vom Identifizierungsmodul (38) erzeugt werden, wobei das Verarbeitungsmodul (40) hat:
einen Speicher (42), der Daten, die technische Merkmale der Batterie anzeigen, und Ereignis-, Transaktions- und Energiedaten speichert, die sich aus vorab festgelegten selektiven Verarbeitungen der empfangenen Informationen abhängig von den technischen Merkmalen der Batterie ergeben; und
eine Recheneinheit (44), die abhängig von den Ereignis-, Transaktions- und Energiedaten eine Energiebilanz bestimmt; und
ein Kommunikationsmodul (48), das einen Übertragungsmodus eines Alarms im Fall einer Unausgewogenheit in der Energiebilanz und im Fall einer Verletzung der Integrität hat, die von den im Speicher (42) des Verarbeitungsmoduls (40) gespeicherten Daten aufgedeckt wird.

2. Geschütztes Steuersystem nach Anspruch 1, wobei die Identifizierungsmodule Identifizierungschips enthalten, die vom Verarbeitungsmodul (40) verwaltete Kennungen liefern, um im Fall eines Unterschieds zu einer vorher im Speicher (42) gespeicherten Kennung einen Ereigniscode in den Speicher (42) des Verarbeitungsmoduls einzuschreiben.

3. Geschütztes Steuersystem nach Anspruch 1, wobei die im Speicher (42) des Verarbeitungsmoduls (40) gespeicherten Ereignisdaten Daten von Ereignissen enthalten, die in den von der Verwaltungseinheit des Fahrzeugs (10) erzeugten Informationen markiert sind.

4. Geschütztes Steuersystem nach Anspruch 1, wobei die im Speicher (42) des Verarbeitungsmoduls (40) gespeicherten Transaktionsdaten Daten der Identifizierung und Konfiguration der vom Identifizierungsmodul (38) erfassten Vorrichtungen, und je nach einem Zustand, in dem sich das Fahrzeug befindet, den Transaktionen zugeordnete Zeitdaten und Typen von Transaktionen anzeigende Daten enthalten, in Zusammenhang mit den gespeicherten Ereignisdaten.

5. Geschütztes Steuersystem nach Anspruch 1, wobei die im Speicher (42) des Verarbeitungsmoduls (40) gespeicherten Energiedaten Daten der Kapazität, der Messung eingehender und ausgehender Energie und der Wirksamkeit der Batterie (6) gemäß den vom Batterieverwaltungssystem (8) erzeugten Informationen und den technischen Merkmalen der Batterie enthalten, in Zusammenhang mit den gespeicherten Transaktionsdaten.

6. Geschütztes Steuersystem nach Anspruch 5, wobei das Batterieverwaltungssystem (8) Bruttowerte der Spannung, des Stroms, der Induktion, der Impedanz und der Temperatur der Batterie misst, und die Recheneinheit konfiguriert ist, Mengen zu bestimmen, die die Energiedaten abhängig von den durch das Batterieverwaltungssystem bei Lade- und Entladevorgängen der Batterie (6) gemessenen Bruttowerten bilden.

7. Geschütztes Steuersystem nach Anspruch 5, wobei die im Speicher (42) des Verarbeitungsmoduls (40) gespeicherten Energiedaten zusätzlich mindestens eines von einer Durchgangsleistung und einer Anzahl von Lade- und Entlade-Gesamtzyklen der Batterie anzeigende Daten enthalten.

8. Geschütztes Steuersystem nach Anspruch 5, wobei die technischen Merkmale der Batterie Merkmale unter einem Chemietyp, einer Anzahl von Zellen, einer Konfiguration der Zellen, einer Nennkapazität der Batterie, einer Nennenergie, einem Spannungsbereich, einer maximalen Ladespannung einer Zelle, einer minimalen Spannung einer Zelle, maximalen Stromwerten kontinuierlich und in Strombedarf, einer maximalen Selbstentladungsrate pro Zelle, einem Ausgleichsmodus und Temperaturbereichen beim Laden und Entladen enthalten.

9. Geschütztes Steuersystem nach Anspruch 1, wobei das Verarbeitungsmodul (40) konfiguriert ist, Energieprojektionen mit der Recheneinheit zu berechnen und Daten zu speichern, die aus den Energieprojektionen resultieren und Bezugsdaten im Speicher bilden.

10. Geschütztes Steuersystem nach Anspruch 1, wobei das Kommunikationsmodul (48) mit dem Bus (12) verbunden ist, und der Übertragungsmodus eines Alarms eine Übertragung eines Unausgewogenheitszustands in der Energiebilanz und eine Übertragung der im Speicher des Verarbeitungsmoduls (40) gespeicherten entsprechenden Daten in verschlüsselter Form auf dem Bus (12) als Antwort auf eine entsprechende Anfrage umfasst, die vom Kommunikationsmodul (48) empfangen wird.

11. Geschütztes Steuersystem nach Anspruch 1, wobei das Elektrofahrzeug (2) mit einem mit dem Bus verbundenen externen Verbindungselement versehen ist, und die vom Identifizierungsmodul (38) verwalteten Vorrichtungen mindestens eines von einer Ladestation (22) und einem Computer (24) enthalten, der an das externe Verbindungselement (20) angeschlossen ist.

12. Geschütztes Steuersystem nach Anspruch 1, wobei mindestens eines der Module zur Integritätsüberwachung (36), zur Identifizierung von Vorrichtungen (38), zur Verarbeitung (40) von Informationen und zur Kommunikation (48) in das Batterieverwaltungssystem (8) integriert ist.

13. Geschütztes Steuersystem nach Anspruch 1, wobei das Kommunikationsmodul (48) mit dem Bus (12) verbunden ist und einen unverschlüsselten Übertragungsmodus und einen verschlüsselten Übertragungsmodus der im Speicher des Verarbeitungsmoduls (40) gespeicherten Daten enthält, je nachdem, ob die Daten ein öffentliches oder privates Attribut gemäß vordefinierten Bedingungen haben.

14. Geschütztes Steuersystem nach Anspruch 1, wobei das Elektrofahrzeug auch mit Schutzrelais (52) der Batterie und mit Sensoren (34) für den Ausfall des elektrischen und mechanischen Schutzes der Batterie (6) und des Gehäuses (4) versehen ist, und das Verarbeitungsmodul (40) konfiguriert ist, Ereignisdaten bei einem Ausfall gemäß einem Zustand eines der Relais oder einem vordefinierten Signal zu speichern, das von einem der Ausfallsensoren (34) erzeugt wird.

15. Geschütztes Steuersystem nach Anspruch 1, wobei das Elektrofahrzeug auch mit einer Steuerung eines Elektromotors (16) versehen ist, die mit dem Bus (12) verbunden ist, und das Verarbeitungsmodul (40) konfiguriert ist, Informationen zu verwalten, die einen Energieaustausch mit der Steuerung des Elektromotors (16) anzeigen.

16. Geschütztes Steuersystem nach Anspruch 1, wobei das Identifizierungsmodul (38) einen Identifizierungsmodus (38) einer mit dem Bus (12) verbundenen Vorrichtung durch mindestens eine MAC-Adresse, eine GPS-Lokalisierung und eine IP-Adresse hat.

17. Geschütztes Steuersystem nach Anspruch 1, wobei der Speicher des Verarbeitungsmoduls (40) konfiguriert ist, Kennungen der Zellen (46) der Batterie, des Gehäuses (4) und des Batterieverwaltungssystems (8) zu speichern, die eine elementare Definition des geschützten Steuersystems bilden, und um Kennungen eines integrierten Ladegeräts (18), der Verwaltungseinheit des Fahrzeugs (10) und einer Steuerung des Elektromotors (16) zu speichern.

18. Geschütztes Steuersystem nach Anspruch 17, wobei das Überwachungsmodul (36) konfiguriert ist, eine Entsprechung der Kennungen mit den vorher im Speicher des Verarbeitungsmoduls (40) gespeicherten Daten zu validieren und einen Ereigniscode im Fall einer erfassten Änderung einzuschreiben, um eine mögliche Verletzung der Integrität anzuzeigen.

19. Geschütztes Steuersystem nach Anspruch 1, wobei die Recheneinheit (44) konfiguriert ist, die Energiebilanz durch eine relative Kalibrierung von Strom-, Spannungs- und Zeitmessungen gemäß einer vom Batterieverwaltungssystem, Batterie (8) erhaltenen Ablesung zu bestimmen, und einen Zustand der Unausgewogenheit in der Energiebilanz zu bestimmen, wenn eine Abweichung zwischen Werten eingehender Energie und ausgehender Energie eine vordefinierte Schwelle überschreitet.

20. Geschütztes Steuersystem nach Anspruch 1, wobei das Batterieverwaltungssystem (8) einen Speicher (62) enthält, der ein Nutzungsprofil des Fahrzeugs anzeigende chronologische Daten speichert, und das Kommunikationsmodul (48) konfiguriert ist, die chronologischen Daten als Antwort auf eine vom Kommunikationsmodul (48) empfangene entsprechende Anfrage zu übertragen.

## Claims

1. A protected system for controlling power transactions for an electric vehicle provided with a box (4) enclosing a battery (6), a battery management system (8), a vehicle management unit (10), and a bus (12) between the vehicle management unit (10) and the battery management system (8), the protected system comprising:
identification modules (30, 32) respectively integrated to the box (4) and the battery management system (8), providing identification information of the box (4) and the battery management system (8);
a set of integrity sensors (34) of the box (4) and of the battery (6) having readable states;
an integrity monitoring module (36) connected to the integrity sensors (34), producing information indicative of the states of the integrity sensors (34);
a device identification module (38) for identification of devices connected to the bus (12);
a processing module (40) for processing information produced by the battery management system (8), the vehicle management unit (10), the integrity monitoring module (36), the device identification module (38), the processing module (40) having:
a memory (42) storing data indicative of technical characteristics of the battery (6), and event, transaction and energy data deriving from preestablished selective processings of the information received as a function of the technical characteristics of the battery; and
a calculation unit (44) determining an energy balance as a function of the event, transaction and energy data; and
a communication module (48) having a mode of transmission of a warning in case of an imbalance in the energy balance and in case of an integrity breach revealed by the data stored in the memory (42) of the processing module (40).

2. The protected system according to claim 1, wherein the identification modules (30, 32) comprise identification chips providing respective identifiers managed by the processing module (40) in order to record an event code in the memory (42) of the processing module (40) in case of difference with an identifier formerly stored in the memory (42).

3. The protected system according to claim 1, wherein the event data stored in the memory (42) of the processing module (40) comprise event data spotted in the information produced by the vehicle management unit (10).

4. The protected system according to claim 1, wherein the transaction data stored in the memory (42) of the processing module (40) comprise identification and configuration data of devices detected by the device identification module (38) and depending on a state in which the vehicle is in, time data associated with the transactions, and data indicative of transaction types, in relation to the event data stored.

5. The protected system according to claim 1, wherein the energy data stored in the memory (42) of the processing module (40) comprise battery capacity, input and output power measurement and efficiency data according to the information produced by the battery management system (8) and the technical characteristics of the battery (6), in relation to the transaction data stored.

6. The protected system according to claim 5, wherein the battery management system (8) measures raw voltage, current, induction, impedance and temperature values of the battery (6), and the calculation unit (44) is configured to determine amounts forming the energy data as a function of the raw values measured by the battery management system (8) during charging and discharging operations of the battery (6).

7. The protected system according to claim 5, wherein the energy data stored in the memory (42) of the processing module (40) further comprise data indicative of at least one of a transited power and a number of total charging and discharging cycles of the battery (6).

8. The protected system according to claim 5, wherein the technical characteristics of the battery (6) comprise characteristics among a type of chemistry, a number of cells, a configuration of the cells, a nominal capacity of the battery (6), a nominal power, a voltage range, a maximum charge voltage of a cell, a minimum voltage of a cell, peak values of current in continuous and in power demand modes, a maximum rate of self-discharge per cell, a mode of equalization and charge and discharge temperature ranges.

9. The protected system according to claim 1, wherein the processing module (40) is configured to compute energy projections with the calculation unit (44) and store data resulting from the energy projections and to form reference data in the memory (42).

10. The protected system according to claim 1, wherein the communication module (48) is connected to the bus (12) and the mode of transmission of a warning includes a transmission of a state of imbalance in the energy balance and a transmission of corresponding data stored in the memory (42) of the processing module (40) in encrypted form on the bus (12) in response to a corresponding request received by the communication module (48).

11. The protected system according to claim 1, wherein the electric vehicle (2) is provided with an external connection element (20) connected to the bus (12), and the devices that the device identification module (38) manages comprise at least one of a charging station (22) and a computer (24) connected to the external connection element (20).

12. The protected system according to claim 1, wherein at least one of the integrity monitoring module (36), the device identification module (38), the information processing module (40) and the communication module (48) is integrated in the battery management system (8).

13. The protected system according to claim 1, wherein the communication module (48) is connected to the bus (12) and comprises a mode of clear transmission and a mode of encrypted transmission of the data stored in the memory (42) of the processing module (40) depending on whether the data have a public or private attribute based on predefined conditions.

14. The protected system according to claim 1, wherein the electric vehicle (2) is also provided with relays (52) for protection of the battery (6) and electrical and mechanical protection failure sensors (34) of the battery (6) and the box (4), and the processing module (40) is configured to store event data in case of a failure based on a state of the relays (52) or a predefined signal produced by one of the failure sensors (34).

15. The protected system according to claim 1, wherein the electric vehicle (2) is also provided with an electric motor controller (16) connected to the bus (12), and the processing module (40) is configured to manage information indicative of power exchange with the electric motor controller (16).

16. The protected system according to claim 1, wherein the device identification module (38) has an identification mode for identifying a device connected to the bus (12) by at least one of a MAC address, a GPS locating and an IP address.

17. The protected system according to claim 1, wherein the memory (42) of the processing module (40) is configured to store identifiers of cells (46) of the battery (6), the box (4) and the battery management system (8) forming a basic definition of the protected system, and to store identifiers of an integrated charger (18), the vehicle management unit (10) and an electric motor controller (16).

18. The protected system according to claim 17, wherein the monitoring module (36) is configured to validate a match of the identifiers with the data formerly stored in the memory (42) of the processing module (40) and record an event code in case of a detected change in order to warn a possible breach in integrity.

19. The protected system according to claim 1, wherein the calculation unit (44) is configured to determine the energy balance by a relative calibration of current, voltage and time measurements based on a reading obtained by the battery management system (8), and determine a state of imbalance in the energy balance when a difference between input and output power values exceeds a predefined threshold.

20. The protected system according to claim 1, wherein the battery management system (8) comprises a memory (62) storing history data indicative of a usage profile of the vehicle (2), and the communication module (48) is configured to transmit the history data in response to a corresponding request received by the communication module (48).
